# EUROPEAN PATENT SPECIFICATION

(11) **EP 3 240 706 B1**
(45) Date of publication and mention of the grant of the patent: **24.06.2020**
(21) Application number: 15876347.4
(22) Date of filing: 31.12.2015
(51) Int. Cl.: B60R 1/00, G03B 17/02, H04N 5/225, B60R 11/04

(54) **REAR VEHICLE CAMERA**
FAHRZEUGRÜCKFAHRKAMERA
CAMÉRA ARRIÈRE DE VÉHICULE

(30) Priority: 31.12.2014 US 201462098807 P; 09.02.2015 US 201562113685 P
(43) Date of publication of application: 08.11.2017
(73) Proprietor: Gentex Corporation, Zeeland, MI 49464 (US)
(72) Inventor: MINIKEY, Danny L., Jr., Zeeland, Michigan 49464 (US); FISH, Richard T., Jr., Zeeland, Michigan 49464 (US); HENDRICKS, Michael G., Zeeland, Michigan 49464 (US)
(74) Representative: Müller-Boré & Partner Patentanwälte PartG mbB
(86) International application number: PCT/US2015/068266
(87) International publication number: WO 2016/109790

(56) References cited:
- WO-A2-2007/053404
- US-A1- 2010 097 519
- US-A1- 2014 298 642
- US-A1- 2014 298 642
- US-B1- 6 462 781
- US-B2- 8 482 664

## Description

### TECHNOLOGICAL FIELD

The present disclosure relates generally to a rear camera for a vehicle. In particular, the rear camera includes a lens unit and a light sensor unit.

### BACKGROUND

Various forms of rear vision systems for vehicles include cameras embedded within portions of the vehicle and directed rearward such that a view of a rear portion of the vehicle can be presented to a driver of the vehicle on a display. Due to the nature of a vehicle, it may be desired for such cameras to be of a generally robust construction so as to be suited to handle any potentially harsh movements of the associated vehicle. Further it may be desired for the construction of such cameras, which may be within or adjacent to the vehicle interior, to minimize any potential noise or vibration emanating therefrom, while maintaining the desired operation.

D1 (US 2014/0298642 A1) discloses a method of assembling a vehicular camera includes providing a lens assembly having a base portion, a lens barrel and a plurality of optical elements in the lens barrel, and providing a circuit element having a circuit board and an imaging array. An adhesive bead is dispensed at the base portion and/or circuit element. The circuit element is placed at the base portion with the adhesive bead therebetween and the optical elements are aligned with the imaging array via a six axis robotic device when the circuit element is at the base portion and in contact with the adhesive bead. The adhesive bead is cured to a first cure level via exposure of the adhesive bead to ultraviolet light. The assembly is moved to a second curing stage and the adhesive bead is cured to a second cure level via heating the adhesive bead.

D2 (WO 2007/053404 A2) discloses a camera module (10) for a vision system of a vehicle includes a circuit element (12), a lens mounting element (14b, 14c), a lens assembly (14) and an outer shell or cover portion (16). The circuit element includes an imaging sensor and associated circuitry (12a). The lens assembly includes at least one optical element (14a) and the lens mounting element (14b, 14c) is attached to the circuit element (12) so as to provide an optical path through the optical element to the imaging sensor at the circuit element. The outer shell (16) is molded over and around the circuit element during a molding process to substantially encapsulate the circuit element within the outer shell. The module and method of making the module thus may substantially seal the circuit element within the overmolded outer shell to protect the circuit element from exposure to the elements.

D3 (US 2010/0097519 A1) discloses in one aspect, the invention is directed to a camera for mounting on a vehicle, wherein the camera housing made up of two housing members, with a conductive coating on the interior of each of the housing members. The two housing members mate together using an interference fit, to provide a greater assurance that they are electrically connected to each other. One of the housing members is connected to ground. In another aspect, the invention provides a camera module that has a housing and a wire harness or wire or lead that is electrically connected to circuitry of the camera and that extends through the camera housing for electrical connection to a vehicle wire harness or the like. The wire or lead extends through a portion of the housing with the housing disposed at the wire prior to connection of the wire to the circuitry of the camera. The electrical connection of the wire to the camera circuitry is made as the housing is assembled. The joint at where the wire extends outward from the housing portion is sealed, such as via shrink wrapping or the like.

### SUMMARY

The present invention is defined by independent claim 1. Preferred embodiments are defined in the dependent claims. In particular, a rearview camera assembly includes a lens unit including a lens barrel having a sensor lens therein and a light sensor unit. The light sensor has a printed circuit board having a light sensor chip mounted thereon, a rear housing supporting the printed circuit board on a first side thereof, and a front housing coupled with the rear housing and electrically connected with the printed circuit board on a second side thereof. The front housing defines a lens holder, and the lens barrel is received within the lens holder of the rear housing so as to align with the light sensor.

In another aspect of the present disclosure, a camera assembly includes a lens unit including a lens barrel having a sensor lens therein and a light sensor unit. The light sensor unit has a front housing defining a stepped profile including a first stepped region from a lateral portion thereof and a second stepped region from the first stepped region. The front housing further defines a lens holder within the second stepped region, and the lens barrel is received within the lens holder. A front housing is coupled with the rear housing. The light sensor unit further has a printed circuit board with a light sensor chip mounted thereon that is positioned at least partially within the second stepped region of the front housing to align with the sensor lens. A portion of the printed circuit is received between corresponding portions of the rear housing and at least a corresponding portion of the first stepped region of the front housing.

In yet another aspect of the present disclosure, a vehicle rear vision system includes a display within an interior of the vehicle and a camera in communication with the display and coupled with the vehicle in a rear-facing position with respect thereto. The camera has a lens barrel with a sensor lens therein, a printed circuit board with a light sensor chip mounted thereon, a rear housing, and a front housing coupled with the rear housing to enclose the printed circuit board therewith. The front housing defines a lens holder receiving the lens barrel aligned with the light sensor and a flange extending oppositely from the lens holder to overlap with at least a portion of the front housing.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a front perspective view of a rear camera of one embodiment of the present disclosure;
FIG. 2 is a top elevation view of the rear camera of FIG. 1;
FIG. 3 is a left side elevation view of the rear camera of FIG. 1;
FIG. 4 is an exploded view of the rear camera of FIG. 1;
FIG. 5 is a front perspective view of a camera mount used to mount the rear camera of FIG. 1 with a vehicle;
FIG. 6 is an exploded view showing an assembly of the rear camera of FIG. 1 with the camera mount of FIG. 5;
FIG. 7 is a schematic view of a vehicle including a rear vision system that uses the camera of FIG. 1;
FIG. 8 is a rear-perspective view of a rear vehicle camera assembly according to another embodiment of the present disclosure;
FIG. 9 is a rear-perspective view of a portion of a vehicle, shown in cross section, having the rear vehicle camera assembly of FIG. 8 mounted therein using a bracket;
FIG. 10 is a top elevation view of the rear vehicle camera assembly of FIG. 8;
FIG. 11 is a right side view of rear vehicle camera assembly of FIG. 8;
FIG. 12 is an exploded view of the rear vehicle camera assembly of FIG. 8;
FIG. 13 is a partial front bottom perspective view of the rear vehicle camera assembly of FIG. 8 shown in exploded fashion relative to the mounting bracket of FIG. 9, which is assembled within a vehicle;
FIG. 14 is a rear-perspective view of a further embodiment of a rear vehicle camera assembly;
FIG. 15 is a top elevation view of the rear vehicle camera assembly of FIG. 14;
FIG. 16 is a right side view of rear vehicle camera assembly of FIG. 14;
FIG. 17 is an exploded view of the rear vehicle camera assembly of FIG. 14;
FIG. 18 is an exploded view of a further assembly of the rear camera assembly of FIG. 14 with an alternative bracket;
FIG. 19 is a is a rear-perspective view of a rear vehicle camera assembly according to another embodiment of the present disclosure;
FIG. 20 is a is a left side elevation view of rear vehicle camera assembly of FIG. 19;
FIG. 21 is a top plan view of the rear vehicle camera assembly of FIG. 19;
FIG. 22 is a rear elevation view of the rear vehicle camera assembly of FIG. 19;
FIG. 23 is an exploded view of the rear vehicle camera assembly of FIG. 19; and
FIG. 24 is a cross-sectional view of the rear vehicle camera assembly of FIG. 19.

### DETAILED DESCRIPTION OF EMBODIMENTS

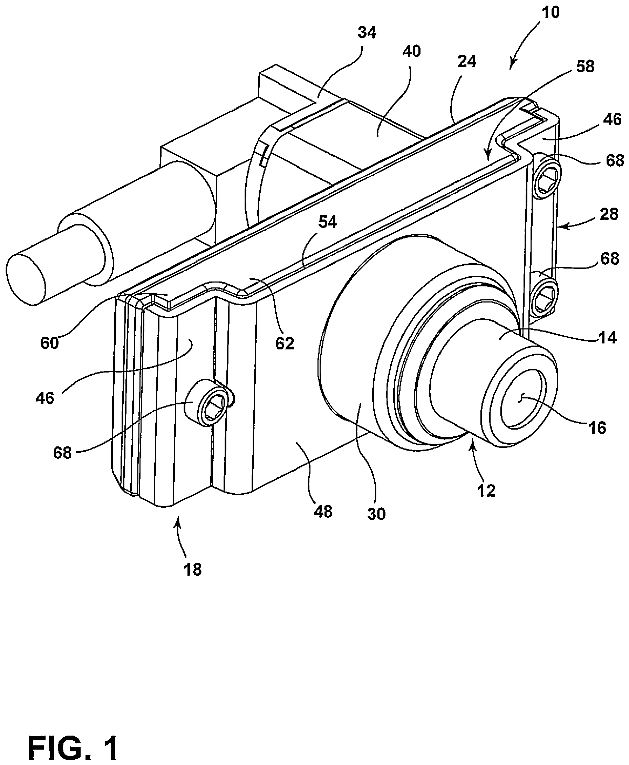

For purposes of description herein the terms "upper," "lower," "right," "left," "rear," "front," "vertical," "horizontal," and derivatives thereof shall relate to the device as oriented in FIG. 1. However, it is to be understood that the device may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

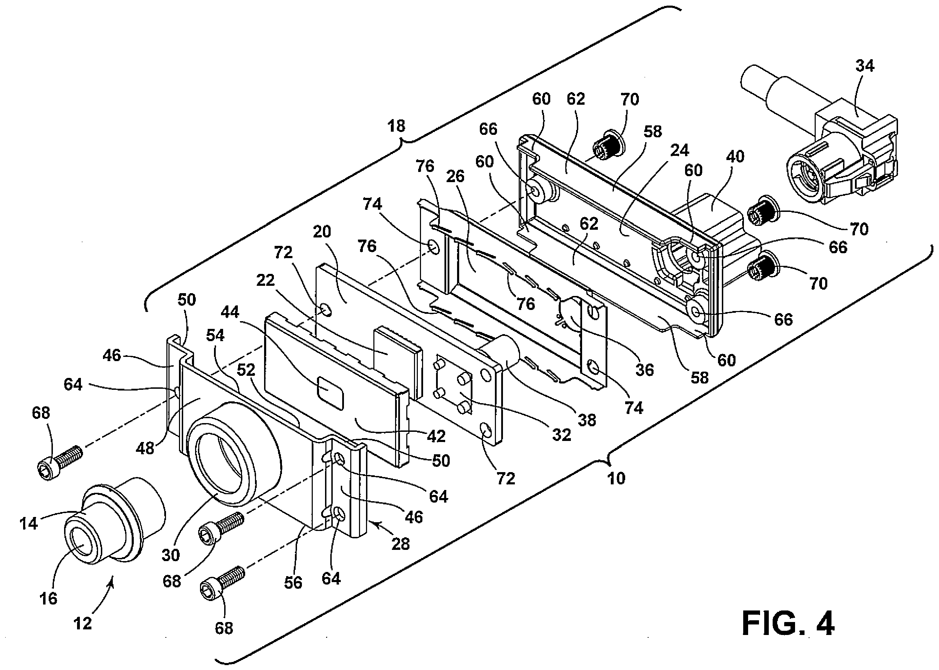

As shown in FIG. 1, reference numeral 10 generally designates a rearview camera assembly. Rearview camera assembly 10 includes a lens unit 12 including a lens barrel 14 having a sensor lens 16 therein. Assembly 10 also includes a light sensor unit 18 including a printed circuit board 20 ("PCB," FIG. 4) having a light sensor chip 22 mounted thereon. Light sensor unit 18 also includes a rear housing 24 with a rear shield 26 coupled therewith, the rear shield 26 electrically connected with the printed circuit board ("PCB") 20. Light sensor unit 18 also includes a front housing 28 coupled with rear housing 24 and positioned over the printed circuit board 20. Front housing 28 defines a lens holder 30 that receives the lens barrel 14 of lens unit 12 so as to align sensor lens 16 with light sensor chip 22.

With reference to FIGS. 1-4, rearview camera assembly 10 includes a light sensor unit 18 and a lens unit 12. The lens unit 12 includes a lens barrel 14 that includes a sensor lens 16 therein. The light sensor unit 18 includes a connector 32 that may be a low-voltage differential signaling (LVDS) connector, coaxial connector, or the like and extends into a rear housing 24 of the light sensor unit 18. As shown in the exploded view of FIG. 4, the rear housing 24 is operably coupled with a rear shield 26 that supports a printed circuit board (PCB) 20. A portion of the connector 32 extends through both the rear shield 26 and the rear housing 24 and couples with the connector 32. A front housing 28 is positioned over the PCB 20. The lens barrel 14 is coupled with the lens holder 30 via an adhesive, by threading, etc.

As shown in FIG. 4, light sensor unit 18 is configured such that PCB 20 is enclosed within the assembled front housing 28 and rear housing 24. This arrangement allows for protection of PCB 20, including light sensor chip 22, as well as appropriate positioning of lens unit 12 with respect to light sensor chip 22 and appropriate mounting of camera assembly 10 within, for example, a vehicle, as discussed further below. Light sensor chip 22 can be in the form of any known electronic component capable of converting an image projected thereon (i.e. by lens unit 12) into a digital signal. In one example, light sensor chip 22 can be a charge-coupled display ("CCD") or complementary metal oxide semiconductor ("CMOS") chip. PCB 20 is, accordingly, configured to provide the necessary connections to and from light sensor chip 22 to provide any necessary power thereto and to read out the image information or signal from light sensor chip 22. Although the precise circuitry of PCB 20 is not shown in the Figures, such circuitry can connect light sensor chip 22 to connector 32, which, as shown, can also be mounted on or otherwise electrically coupled with PCB 20. In this manner, the image data generated by light sensor chip 22 can be read out from light sensor chip 22 through PCB 20 and out from connector 32. Additional circuitry, if needed, can be provided to convert the raw data from light sensor chip 22 to a signal compatible with, for example, connector or other electronic components of camera assembly 10 and the like. As illustrated, rear shield 26 can include an aperture 36 therein through which a connection feature 38 of an associated low-voltage differential signaling ("LVDS") connector can pass. Similarly, rear housing 24 can include a receptacle 40 extending on a side thereof opposite lens 16 that can house a portion of connector portion 38 of connector 32 and can further allow for optimal engagement of adapter 34 with connector portion 38 of connector 32 for transmission of the signal provided by connector 32 to adapter 34 and, further, to any components connected therewith.

As further shown in FIG. 4, light sensor unit 18 can also include a front shield 42 that can extend over all, or a portion of, PCB 20 on a side generally opposite rear shield 26. As shown, such a front shield 42 can extend at least over light sensor chip 22 and any portion of connector 32 exposed on the side of PCB 20 underlying front RF shield 42. Both front shield 42 and rear shield 26 can provide shielding for PCB 20, including light sensor chip 22, from interference, including in the form of radio frequency (RF), other electronic signals, or the like, particularly in an embodiment where front housing 28 and rear housing 24 are of a plastic material, such as polycarbonate or the like. In some instances, front shield 42 may not be necessary, depending on the location of camera assembly 10 within an associated vehicle, for example, as well as any electric signals generated or emitted by any structures adjacent to camera assembly 10. If included within light sensor unit 18, front shield 42 can include an aperture 36 within an area overlying light sensor chip 22, such that lens unit 12 can project an image onto light sensor ship 22 without interference from front shield 42. In an alternative embodiment, both rear housing 24 and front housing 28 can be made of metal, such as aluminum, various aluminum alloys, steel, stainless steel, magnesium alloy, or the like. Such housings 24 and 28 can be made by casting, machining (or combinations of casting and machining), metal injection molding or the like. In such an embodiment, shielding is provided by rear housing 24 and front housing 28, allowing front shield 42 and rear shield 26 can be eliminated.

As shown in FIGS. 1-4, rear housing 24 and front housing 28 can be mutually-engageable so as to fully enclose PCB 20, including light sensor chip 22, as well as rear shield 26 and front shield 42 (if included). As shown, front housing 28 can, at least in the areas outside of lens holder 30, be of a generally uniform sheet-like or substrate-like construction having a stepped shape in one direction. As shown, such a stepped shape can be such that front housing 28 defines a first stepped region 46 and a second stepped region 48 such that front housing 28 is spaced apart from rear shield 26 by varying distances within each such region 46, 48. As shown, within first stepped region 46, front housing 28 can be positioned such that the interior surface thereof generally contacts the adjacent, outwardly-extending portions of PCB 20, which as discussed below, can help retain PCB in a desired positioned within the assembled front housing 28 and rear housing 24. Further, within second stepped region 48, front housing 28 is positioned generally away from PCB 20 in a spaced-apart manner so as to accommodate light sensor unit 18 therein, such that front housing 28 does not come into contact with light sensor chip 22 during, for example, abrupt movement of camera assembly 10, thereby helping to prevent damage thereto. The positioning of front housing 28 within second stepped region 48 away from PCB 20 can, further, help to space lens 16 away from light sensor chip 22 at an appropriate distance for focusing of an image thereon.

As can further be seen in FIGS. 1-4, the stepped structure of front housing 28 is such that front housing 28 defines a first indentation step 50 and a second indentation step 52 within both an upper periphery 54 and a lower periphery 56 thereof. Accordingly, rear housing 24 can include upper and lower compliance flanges 58 that are configured to, respectfully, engage along the upper periphery 54 and lower periphery 56 of front housing 28. As such, compliance flanges 58 can include respective first step 60 and second step 62 so as to extend within first stepped region 46 and second stepped region 48 of the respective upper periphery 54 and lower periphery 56 of front housing 28. Such a structure allows for rear housing 24 and front housing 28 to mutually engage so as to generally fully enclose at least PCB 20, as discussed above.

As shown in FIG. 4, both front housing 28 and rear housing 24 can include respective sets of holes 64 and 66 to receive fasteners therethrough for coupling of front housing 28 with rear housing 24. As shown, such fasteners can include mutually-engaging bolts 68 and barrel nuts 70, with barrel nuts 70 being receivable within holes 66 in rear housing 24, and bolts 68 being engageable through holes 64 in front housing 28 so as to threadably engage with barrel nuts 70. As further shown, PCB 20 can include a corresponding plurality of holes 72 that align with both holes 64 and 66. The presence of such holes 72 can allow for PCB 20 to extend between front housing 28 and rear housing 24 within first stepped region 46 such that bolt 68 can engage with barrel nuts 70 in an area that overlies the portion of PCB including holes 72. Such a structure can allow for front housing 28 to be engaged with PCB 20 by tightening of bolts 68 so as to reliably retain PCB 20 in position within the assembled front housing 28 and rear housing 24. Alternatively, rear housing 24 can include threaded holes to threadably receive bolts 68. Similarly, rear shield 26 can include an additional set of holes 74 that further align holes 64, 66, and 72, respectively. Such holes 74 can, further, allow for rear shield 26 to be captured between PCB 20 and adjacent portions of rear housing 24 such that tightening of bolts 68 into barrel nuts 70 helps to retain rear shield 26 in a desired position. Such engagement can help to prevent rattling of components (i.e. PCB 20 and rear shield 26) within camera assembly 10 and can prevent damage of such components.

With continued reference to FIG. 4, rear shield 26 can include a plurality of compliance arms 76 in portions thereof that are positionable generally adjacent to front housing 28 when assembled with rear housing 24. Rear shield 26 can be of a metallic material so as to help shunt electromagnetic radiation around and/or away from PCB 20. Compliance arms 76 can take advantage of the generally resilient nature of such metallic materials, by providing a plurality of spring-like features, thereby allowing rear shield 26 to be generally oversized with respect to second stepped region 48, within which they may be positioned when engaging with front housing 28. As such, when front housing 28 is assembled onto rear housing 24, compliance arms 76 may be caused to deform, such as by deflection, compression or the like, by an amount that may vary with, for example, a stack-up of tolerances between front housing 28 and rear housing 24. Such compression can allow for rear shield 26 to compressibly engage between both rear housing 24 and front housing 28 to create a generally tight fit therebetween, regardless of material tolerances. This can further reduce the likelihood of rattling of rear shield 26 against either front housing 28 or rear housing 24, and can further help to create a more reliable fit between front housing 28 and rear housing 24, thereby potentially reducing rattling and other such adverse conditions therebetween.

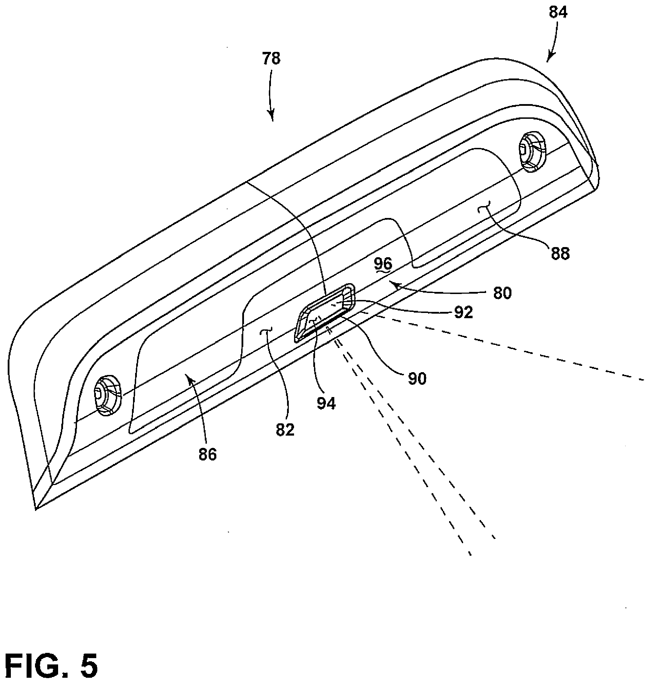

Referring to FIG. 5, a center high-mount stop lamp 78 for a vehicle is shown in an example of a structure in which camera assembly 10 can be mounted for use in a vehicle. In the example shown, stop lamp 78 has a first light source 80 operably coupled with a lighting system of the vehicle and associated with a first portion 84 of a housing 86 of stop lamp 78. A second light source 82 is operably coupled with a braking system of the vehicle and is associated with a second portion 88 of housing 86. Housing 86 is at least partially transparent and defines a viewing aperture 90. Camera assembly 10 is positioned behind the viewing aperture 90 and has assembled therewith a lens cover 92. The lens cover 92 includes an outer surface 94 that is generally flush with an outer surface 96 of the at least partially transparent housing 86. A lens gasket 98 can be positioned between lens cover 92 and viewing aperture 90 to help define a tight seal therebetween so as to, for example, generally prevent water intrusion therethrough.

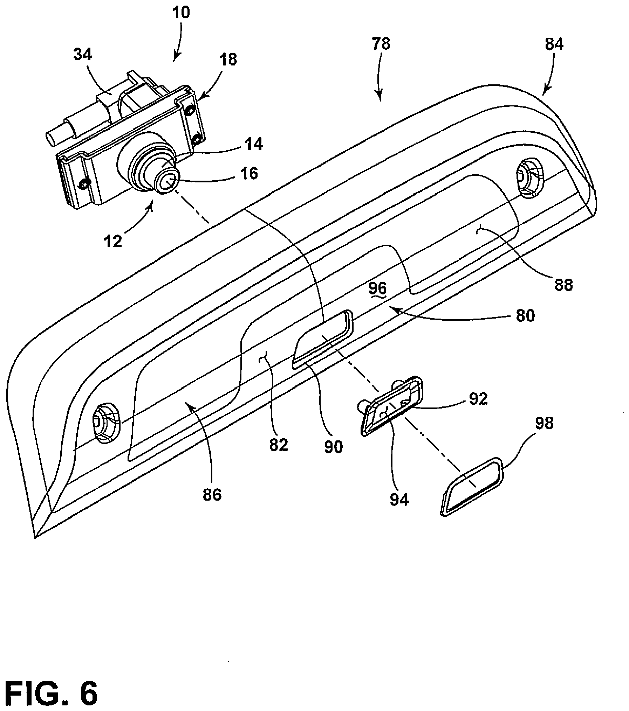

As shown in FIG. 6, the housing 86 is configured to receive the camera assembly 10. In particular housing 86 may include one or more internal features or structures to retain camera assembly 10 in a position such that outer surface 94 of lens cover 92 is retained in the flush position with respect to outer surface 96 of housing 86, as discussed above. An example of such internal structures is described in co-pending, commonly-assigned U.S. Provisional Patent Application No. 62/098,856, filed on December 31, 2014, entitled "CAMERA MOUNT," the entire disclosure of which is hereby incorporated by reference herein. Camera assembly 10 may be mounted in a similar manner within and generally behind other structures of a vehicle 2, including but not limited to a bumper, rear deck lid, various trim pieces, or the like. Such mounting may be achieved in a manner similar to this which is implemented in connection with the example stop-lamp 78 of FIGS. 5 and 6.

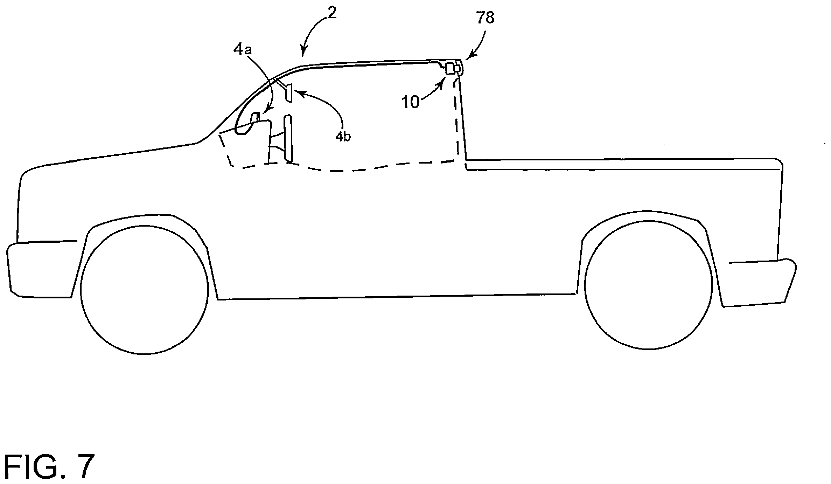

As shown in FIG. 7, a vehicle 2 can include the stop lamp 78 of FIGS. 5 and 6 with rear camera 10 mounted therein. The camera 10 can be a part of a rear vision system for vehicle 2 that can include a video display 4 therein that is in electronic communication with camera 10, such as by a connection line 6. In other examples, camera 10 may be connected with a multimedia system of vehicle 2 that is then connected with display 4a or 4b. In the example shown FIG. 7, display 4a is a dashboard mounted display that can take on many different forms and be positioned in various locations within vehicle 2. In the other illustrated example, the display 4b may be in the form of a rearview mirror with a display therein, such as a full-display mirror or the like. The illustrated vehicle 2 is intended as an example, a further example of which may include only one of display 4a and 4b.

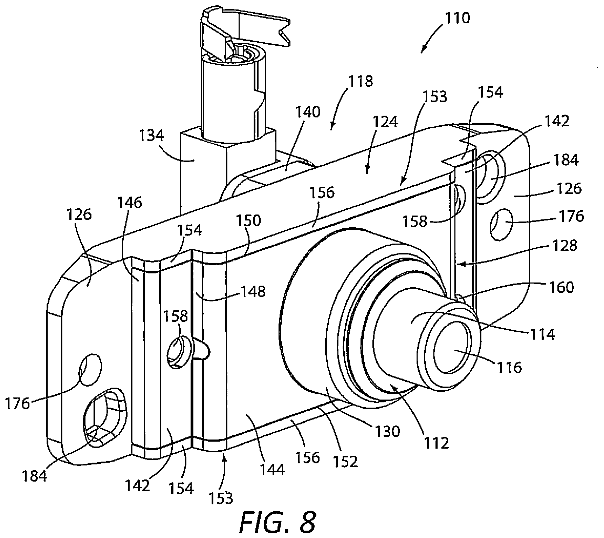

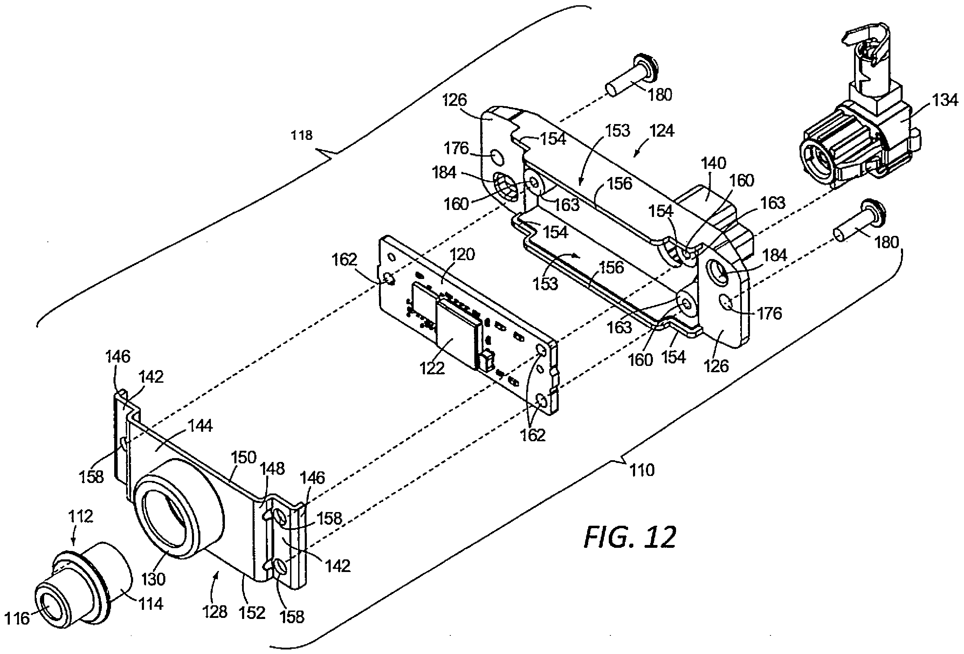

As shown in FIG. 8, reference numeral 110 generally designates a second embodiment of a rearview camera assembly. Rearview camera assembly 110 includes a lens unit 112 having a lens barrel 114 with a sensor lens 116 therein. The assembly 110 further includes a light sensor unit 118 having a printed circuit board 120 (FIG. 12) with a light sensor chip 122 mounted thereon. A rear housing 124 defines first and second coupling flanges 126 extending laterally outwardly on opposite sides of the rear housing 124. A housing 128 is coupled with the rear housing 124 over the printed circuit board 120. The front housing 128 defines a lens unit receptacle 130, and the lens barrel 14 is received within the lens unit receptacle 30 so as to align with the light sensor 22.

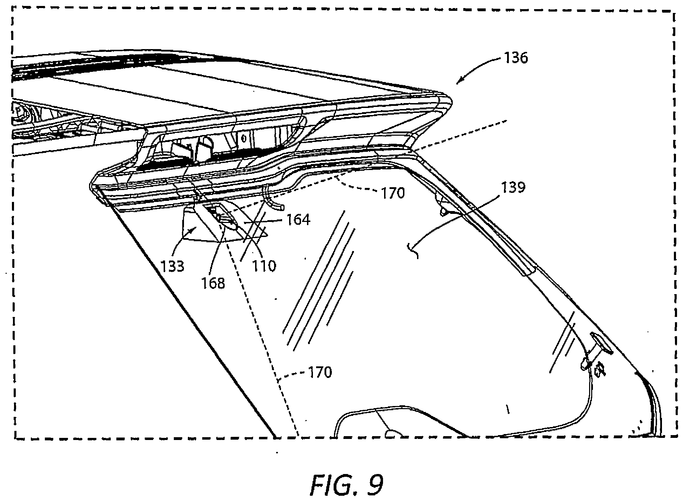

As shown in FIG. 9, camera assembly 110 can be mounted within a vehicle 136 by coupling thereof with, and at least partially within, a bracket 133. Bracket 133 may be configured to receive camera 110 and to retain camera 110 in an appropriate position for obtaining an image therewith of the area to the rear of the vehicle 136. Such an image being presentable on a full display rearview mirror or a rearview-mirror shaped display in place of a typical rearview mirror positioned within vehicle 136 in the general location of a typical rearview mirror (such as display 4b in FIG. 7). The particular configuration of bracket 133 may vary depending on the vehicle 136 within which it is used, but in general, and as described further below, can be shaped so as to be coupled with the rear windshield 139 of vehicle 136 near an upper portion thereof, thereby generally approximating the height of the included full display mirror.

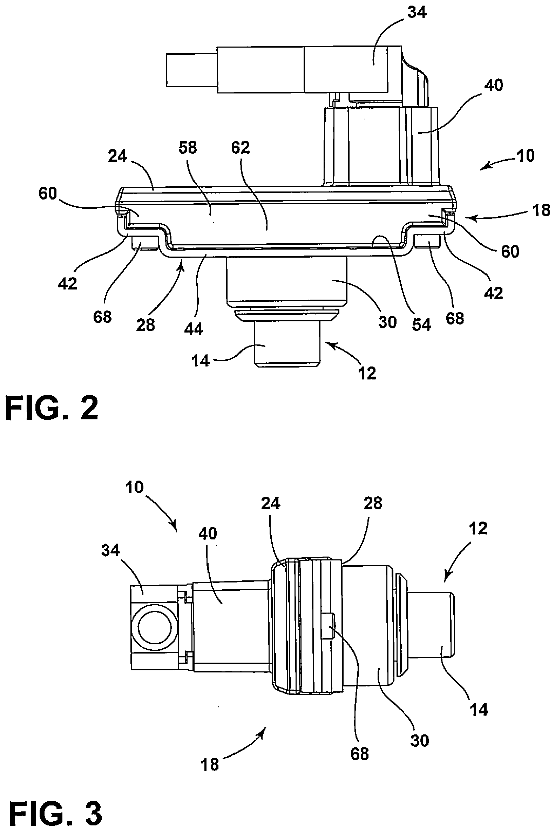

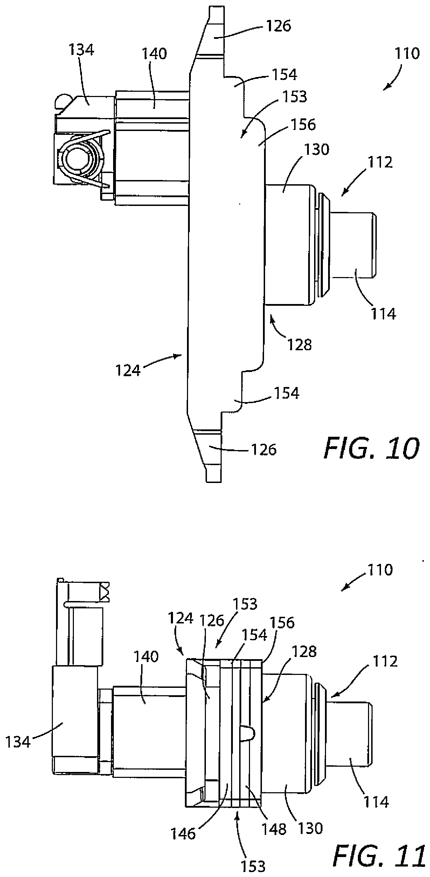

With reference to FIGS. 10-12, rearview camera assembly 110 includes a light sensor unit 118 and a lens unit 112. The lens unit 112 includes a lens barrel 114 that includes a sensor lens 116 therein. The light sensor unit 118 may include, for example a connector (not shown) that extends into rear housing 124 of the light sensor unit 118 and may include an a connecting feature that can allow for external connection with an appropriate signal-transmitting cable, such as cable 138, depicted in FIG. 2 by connection with an adaptor 134 on an end thereof. Both the connector and cable 138 can be any type suited for the transmission of a video signal, including digital, such as a low-voltage differential signaling ("LVDS"), co-axial or the like. Front housing 128 is positioned over the PCB 120 on a side thereof opposite rear housing 124. In an example, one or both of rear housing 124 or front housing 128 may be of a plastic material and have associated therewith a radio-frequency ("RF") shield that may be in the form of a thin, metal element along all or a portion of an interior thereof. In another example, either of rear housing 124 and front housing 128 can be of a metallic material, such as aluminum, stainless steel, or the like. In a further example, rear housing 124 can be of a plastic material (and may have an RF shield assembled therewith) and front housing 128 can be of metal. The lens barrel 114 may be coupled with the lens unit receptacle 130 via an adhesive, by threading, a set-screw, or the like.

As shown in FIG. 12, light sensor unit 18 is configured such that PCB 120 is enclosed within the assembled front housing 128 and rear housing 124. This arrangement allows for protection of PCB 120, including light sensor chip 122, as well as appropriate positioning of lens unit 112 with respect to light sensor chip 122 and appropriate mounting of camera assembly 110 within, for example, vehicle 136, as discussed above and, further, below with respect to FIG. 9. Light sensor chip 122 can be in the form of any known electronic component capable of converting an image projected thereon (i.e. by lens unit 112) into a digital signal. In one example, light sensor chip 122 can be a charge-coupled display ("CCD") or complementary metal oxide semiconductor ("CMOS") chip. PCB 120 is, accordingly, configured to provide the necessary connections to and from light sensor chip 122 to provide any necessary power thereto and to read out the image information or signal from light sensor chip 122.

Although the precise circuitry of PCB 120 is not shown in the Figures, such circuitry can connect light sensor chip 122 to the connector (not shown), which can also be mounted on or otherwise electrically coupled with PCB 120. In this manner, the image data generated by light sensor chip 122 can be read out from light sensor chip 122 through PCB 120 and out from the associated connector. Additional circuitry, if needed, can be provided to convert the raw data from light sensor chip 122 to a signal compatible with, for example, the connector or other electronic components of camera assembly 110 and the like. Similarly, rear housing 124 can include a receptacle 140 extending on a side thereof opposite lens 116 that can house a portion of the connector and can further allow for optimal engagement of adapter 134 with the connector portion of the connector for transmission of the signal provided by the connector to adapter 134 and, further, to any components connected therewith.

As shown in FIGS. 1-4, rear housing 124 and front housing 128 can be mutually-engageable so as to fully enclose PCB 120, including light sensor chip 122, as well as any RF shields that may be included. As shown, front housing 128 can, at least in the areas outside of lens unit receptacle 130, be of a generally uniform sheet-like or substrate-like construction having a stepped shape in one direction. As shown, such a stepped shape can be such that front housing 128 defines a first stepped region 142 and a second stepped region 144 such that front housing 128 is spaced apart from PCB 120 by varying distances within each such region 142, 144. As shown, within first stepped region 142, front housing 128 can be positioned so as to generally contact adjacent portions of PCB 120, which as discussed below, can help retain PCB 120 in a desired positioned within the assembled front housing 128 and rear housing 124. Further, within second stepped region 144, front housing 128 is positioned generally away from PCB 120 in a spaced-apart manner so as to accommodate light sensor chip 122 therein, such that front housing 128 does not come into contact with light sensor chip 122 during, for example, abrupt movement of camera assembly 110, thereby helping to prevent damage thereto.

The positioning of front housing 128 within second stepped region 144 away from PCB 20 can, further, help to space lens 116 away from light sensor chip 122 at an appropriate distance for focusing of an image thereon. Front housing 128 can be of metal, including stainless steel, aluminum, or the like, or another material, including some plastics, having a low coefficient of thermal expansion ("CTE") such that any movement of lens unit 112 during temperature changes affecting camera assembly 110 are minimized. When such materials are utilized, front housing 128 can be formed by stamping, drawing, extrusion, injection molding, or the like, with lens unit receptacle 130 being a separate piece of the same or a different material that is coupled therewith, such as by adhesives, solder, welding, mechanical fasteners, or the like.

As can further be seen in FIGS. 8-12, the stepped structure of front housing 128 is such that front housing 128 defines a first indentation step 146 and a second indentation step 148 within both an upper periphery 150 and a lower periphery 152 thereof. Accordingly, rear housing 124 can include compliance flanges 153 that are configured to, respectfully, engage along the upper periphery 150 and lower periphery 152 of front housing 128. As such, compliance flanges 153 can include respective first step 154 and second step 156 so as to extend within first stepped region 142 and second stepped region 144 of the respective upper periphery 150 and lower periphery 152 of front housing 128. Such a structure allows for rear housing 124 and front housing 128 to mutually engage so as to generally fully enclose at least PCB 120, as discussed above.

As shown in FIG. 12, both front housing 128 and rear housing 124 can include respective sets of holes 158 and 160 to receive fasteners 159 therethrough for coupling of front housing 128 with rear housing 124. Such fasteners 159 can extend through holes 158 to threadably engage with holes 160 or, alternatively, can include mutually-engaging bolts and barrel nuts, with such barrel nuts being receivable within holes 160 in rear housing 124, and such bolts being engageable through holes 158 in front housing 128 so as to threadably engage with the barrel nuts. As further shown, PCB 120 can include a corresponding plurality of holes 162 that align with both holes 158 and 160. The presence of such holes 162 can allow for PCB 120 to extend between front housing 128 and rear housing 124 within first stepped region 142 such that fastener 159 can engage with holes 160 in an area that overlies the portion of PCB 120 including holes 162. Such a structure can allow for front housing 128 to be engaged with PCB 120 by tightening of fasteners 159 so as to reliably retain PCB 120 in position within the assembled front housing 128 and rear housing 124 and, particularly, such that PCB 120 is supported on bosses 163 that extend inward within rear housing 124 and through which holes 160 extend. Such engagement can help to prevent rattling of components (i.e. PCB 120) within camera assembly 110 and can prevent damage of such components.

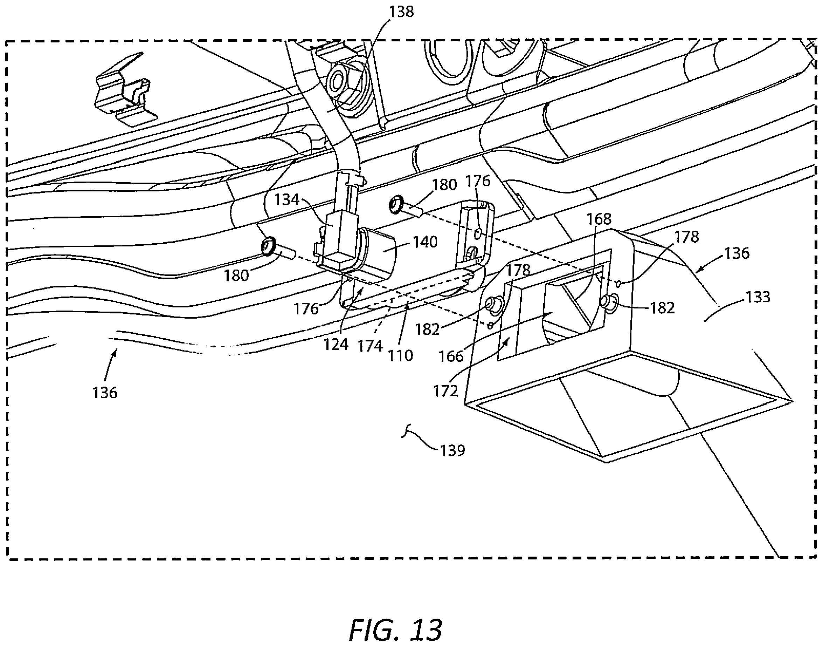

Referring to FIGS. 9 and 13, coupling of camera assembly 110 within vehicle 136 is shown as being achieved by coupling of camera assembly 110 with bracket 133, which is coupled with rear windshield 134 of vehicle 136. As shown, bracket 133 can include a rear surface 164 that is configured to be coupled with rear windshield 139 of vehicle 136, such as by various adhesives, including double-sided tape, glue, or the like. The particular shape of surface 164, including both the general profile and positioning thereof (i.e. the angle thereof) may depend on the particular configuration of vehicle 136 within which camera assembly 110 is intended to be assembled, including the angle and profile of rear windshield 134. As shown, bracket 133 includes an internal cavity 166 therein that is sized to at least partially receive camera assembly 110 therein such as at least lens unit 112 is positionable therein. Bracket 133 further includes an opening 168 on surface 164 that is sized at least to afford a desired field of view 170 which may depend on the particular lens 116 included in lens unit 112, for example. Cavity 166 may, accordingly, be further configured to correlate with the size of opening 168 to further allow the desired field of view 170 to be achieved through bracket 133. In an example, cavity 166 may taper outwardly toward opening 168 to at least approximate the angle achieved by the field of view 170. In another example, cavity 166 may be generally oversized relative to field of view 170 so as to not interfere therewith.

As shown in FIG. 13, bracket 133 can define a receptacle 172 therein, in communication with cavity 166, that can be sized to receive a further portion of camera assembly 110 therein, which, as illustrated, may include an outer periphery 174 of rear housing 124, in combination with lens unit receptacle 130 in the area of first step region 142. In this manner, remaining portions of camera assembly 110, including outer flanges 126 may extend outwardly along bracket 133 in an area outside cavity 166. Rear housing 124 may include respective connector holes 176 through flanges 126, respectively, which align with holes 178 in bracket 133 such that respective mounting screws 180 can be received through holes 176 to threadably engage with holes 178, thereby coupling camera assembly 110 with bracket 133. Such coupling is thusly achieved in a manner such that lens 116 is appropriately positioned within cavity 166 and oriented such that field of view 170 is aimed, as desired, with respect to vehicle 136.

To further achieve a desired alignment of lens 116 with opening 168, bracket 133 can include locator pegs 182 that extend therefrom in the area of flanges 126 to engage with respective locator apertures 184 that are defined on flanges 126. In this manner, camera assembly 110 can be appropriately aligned with bracket 133 by positioning of outer periphery 174 within receptacle 172 and locator pegs 182 within locator aperture 184, prior to coupling of camera assembly 110 with bracket 133 by use of mounting screws 180, as previously described. Such an arrangement can remove the need for mounting screws 180, and particular the fit thereof with connector holes 176, to provide proper alignment of camera assembly 110, which may be difficult due to tolerances required of connector holes 176 which are generally oversized relative to mounting screws 180. Further, locator pegs 182 may be configured to form a slight press-fit engagement with locator aperture 184 such that the positioning of camera assembly 110 with respect to bracket 133 is less susceptible to vibration while vehicle 136 is moving. Further, such an arrangement can provide for compensation due to expansion and contraction of bracket 133 due to changes in temperature, particularly the external temperature of vehicle 136 which may be conducted through rear windshield 134 to bracket 133. It is noted that variations of rear housing 124 can include different numbers, locations, and configurations of flanges 126, with bracket 133 being modified to accommodate the particular configuration of flanges 126 for coupling of camera assembly 110 thereto in accordance with the principles described herein. In this manner, camera assembly 110 can be used in a system similar to system 2 in FIG. 7 or other variations thereof.

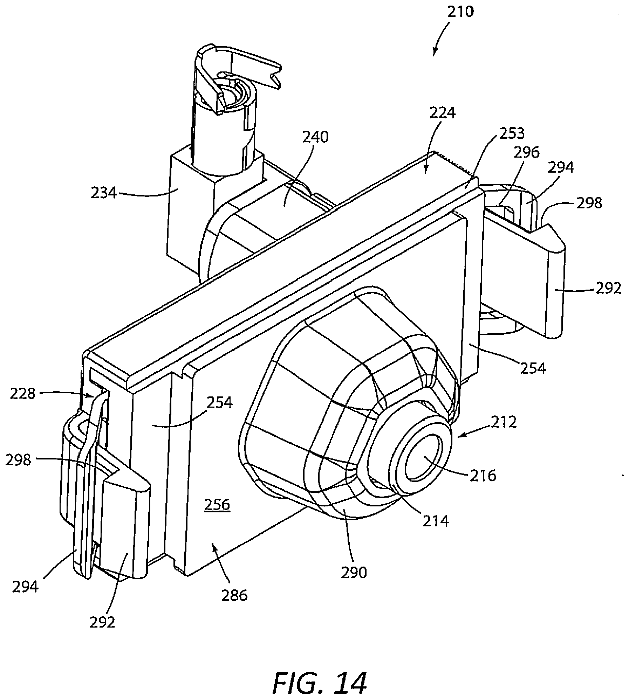

As shown in FIGS. 14-18, a further embodiment of a camera assembly 210 can be generally similar to camera assemblies 10 and 110 described above with respect to FIGS. 1-13. In particular, camera assembly 210 can include a rear housing 224 and a front housing 228 coupleable therewith and configured for housing a PCB 220 therein. Further, lens holder 230 can be configured for retaining a lens unit 212, including a lens barrel 214 and a lens 216 such that lens 216 is appropriately positioned with respect to light sensor 222 for projecting an image thereonto. Additionally, rear housing 228 can include an adapter receptacle 240 for receiving an adapter 239 to allow camera assembly 210 to connect with a data cable (not shown, similar to data cable 138 shown in FIG. 13). Other similar features may be included that are identified by use of similar numbers to those of FIGS. 8-13, increased by 100 and, unless otherwise describe, are generally similar to the description above.

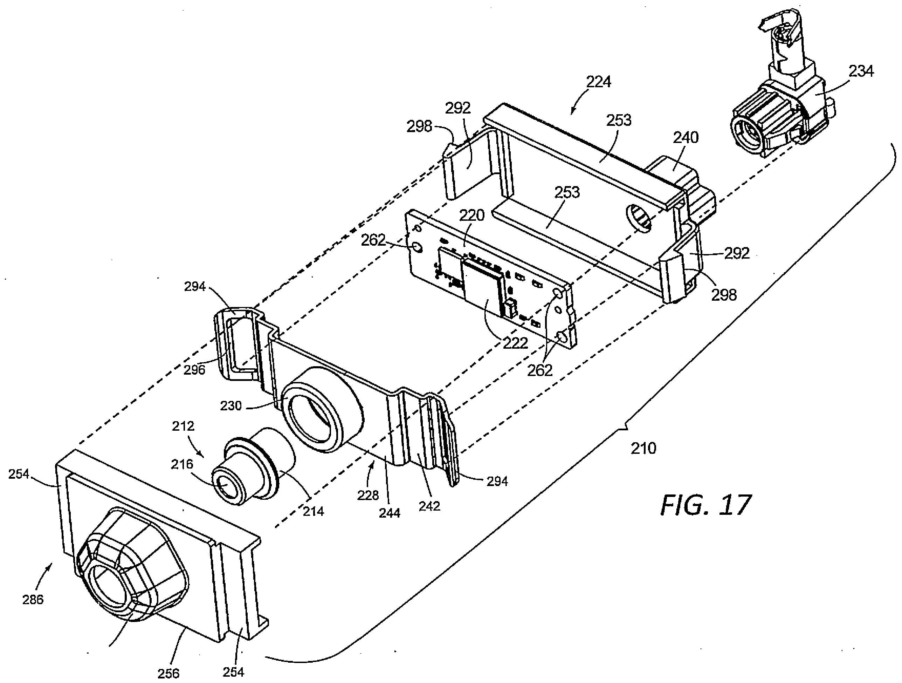

As described above, front housing 228 can be of a generally uniform, sheet like material and including stainless steel, plastic, or the like that is formed to define a stepped structure including first step region 242 and second stepped region 244, with lens unit receptacle 230 extending from within second stepped region 244. Front housing 228 may be coupled with rear housing 224 in a manner similar to the coupling of front housing 228 with respect to rear housing 224 described above with respect to FIG. 12. As shown in FIG. 17, rear housing 224 may include compliance flanges 253 that are spaced generally away from front housing 228 when assembled therewith and which, further, do not include indentation steps therein (as with rear housing 124, as described above with respect to FIG. 12). Such an arrangement can be used to accommodate a portion of a rear cover 286 that may be included in camera assembly 210. Front housing 228 can include holes (not shown therein) such that front housing 228 can be coupled with rear housing 224 using screws (not shown) that can engage with threaded holes (not shown) in rear housing 224 in a manner similar to that which is described above with respect to the embodiment of FIGS. 8-13.

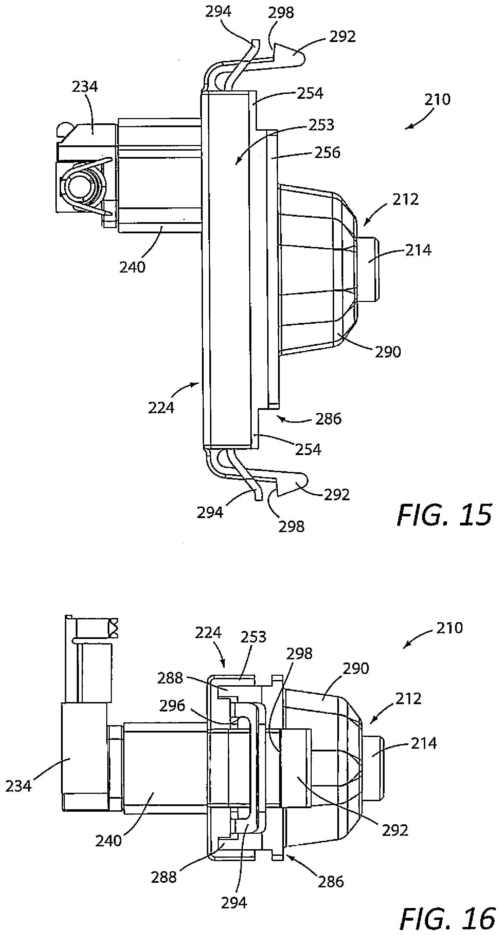

As shown in FIGS. 14-17, rear cover 286 can be configured to generally cover and at least partially enclose front housing 228 on a side opposite rear housing 224. Accordingly, rear cover 286 may have a plurality of stepped regions 254 and 256 that generally correspond to stepped regions 242 and 244 in front housing 228. Further, rear cover 286 may include a lens barrel cover 290 that is configured to extend over lens unit receptacle 230 and, optionally, a portion of lens barrel 214. As shown in FIGS. 15 and 16, a further portion of lens barrel 214 may extend outwardly from lens barrel cover 290 such that lens 216 is exposed thereon. Rear cover 286 may include flanges 288 that can extend between a gap formed between flanges 253 in rear housing 224 and front housing 228. In this manner, rear cover 286 may assemble with rear housing 224 by a press-fit arrangement. Additionally or alternatively adhesives, screws, or mutually-engageable snap- or press-fit features may be used to couple rear cover 286 with rear housing 224. In an alternative arrangement, rear housing 224 may include steps within flange 253 in a manner similar to flanges 153, described above with respect to FIG. 12, so as to enclose PCB 220 therein without the use of a rear cover 286. In this manner, the fit of front housing 228 with rear housing 224 may be similar to that of front housing 128 and rear housing 124, and related portions thereof, as described above with respect to FIG. 12.

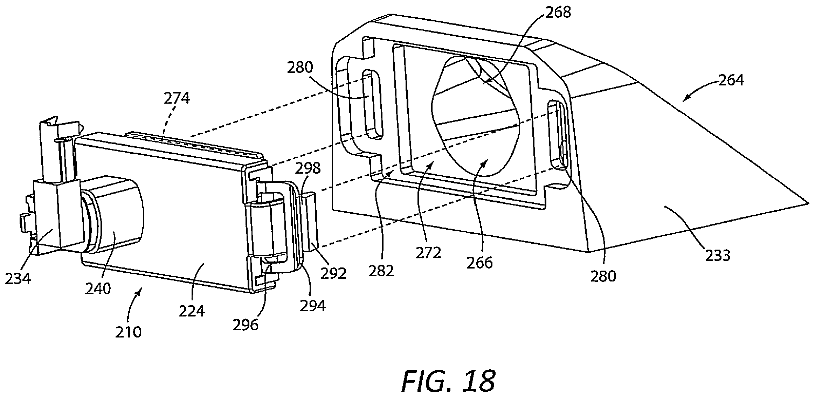

As further shown in FIGS. 14-17, a pair of oppositely-positioned snap tabs 292 may extend from rear housing 224 in a generally outward and rearward manner with respect thereto. Further, front housing 228 can include oppositely-positioned spring flanges 294 that also extend generally outward and rearward therefrom. In the arrangement shown, snap tabs 292 can extend through openings 296 in spring flanges 294, thereby allowing spring flanges 294 to extend outwardly beyond snap tabs 292 and, further, through a greater vertical distance than snap tabs 292. As shown in FIG. 18, snap tabs 292 and spring flanges 294 can be used to couple camera assembly 210 with a bracket 233 that is a variation of bracket 133 described above with respect to FIGS. 9 and 13. In particular, bracket 233 can include a mounting surface 264 that can be coupled with a rear windshield of a vehicle in a manner similar to the coupling of bracket 133 with rear windshield 139 of vehicle 236 described above with respect to FIGS. 9 and 13. Further similarly, bracket 233 can include a cavity 266 for receiving a portion of camera assembly 210 therein with lens 216 appropriately positioned therein and with respect to an associated opening 268 to surface 264 such that the field of view of lens 216 is accommodated.

As shown in FIG. 18, bracket 233 can further include a receptacle 272 sized to receive camera assembly 210 therein around outer periphery 274 thereof, which can contribute to the alignment of lens 216 within bracket 233 as shown in FIG. 18, outer periphery 274 of camera assembly 210 may be defined around second step region 256 on rear cover 286, such that first step region 254 thereof extends outwardly along a portion of bracket 233 outside of receptacle 272. In particular, such an area may be defined in a secondary receptacle 282 adjacent receptacle 272. In an embodiment of camera assembly 210 without a rear cover 286, receptacle 272 may be sized similarly to receptacle 172, as described above with respect to FIG. 13.

Further, bracket 233 can include tab slots 280 therein spaced oppositely outside of receptacle 272 and, optionally, within secondary receptacle 282, to receive snap tabs 292 therein. Tab slots 280 can, accordingly, be positioned such that snap tabs 292 depress inwardly during assembly of camera assembly 210 with bracket 232 and return outwardly when camera assembly 210 is appropriately positioned within receptacle 272. In an example, tab slots 280 can be configured such that snap tabs 292 remain under slight inward compression when camera assembly 210 is assembled with bracket 233. Such an arrangement can help compensate for variations in the size of relative positioning of tab slots 280 due to expansion and contraction of bracket 233 due to changes in temperature.

When camera assembly 210 is assembled with bracket 233, spring flanges 294 can extend along bracket 233 in the area outside tab slots 280 opposite from undercut 298 in snap tabs 292 such that a portion of bracket 233 is captured therebetween. In such a manner, spring flanges 294 can be arranged such that some flexing thereof is achieved during such assembly to provide a generally secure snap fit of camera assembly 210 with bracket 233 to help reduce vibration of camera assembly 210 with respect to bracket 233 and to allow spring flanges 294 to absorb any fluctuations in the thickness of bracket 233 in the area between spring flanges 294 and undercuts 298 due to temperature cycling of bracket 233. In this manner, camera assembly 210 can be used in a system similar to system 2 in FIG. 7 or other variations thereof.

In a variation of camera assembly 210, a portion of front housing 224, including first step region 242 and second step region 244, as well as lens unit receptacle 230 can be made of injection-molded plastic or the like. In such an example, spring flanges 294 can be made of metal, such as stainless steel or the like, as described above with respect to the FIGS. 14-17, and can be affixed with the remaining portions of front housing 228. In such an example, spring flanges 294 can be coupled with other adjacent portions of front housing 228 by over molding, the use of meltable tabs included within the plastic portion of front housing 228 that engage with corresponding holes in spring flanges 294, or using mechanical fasteners or adhesives.

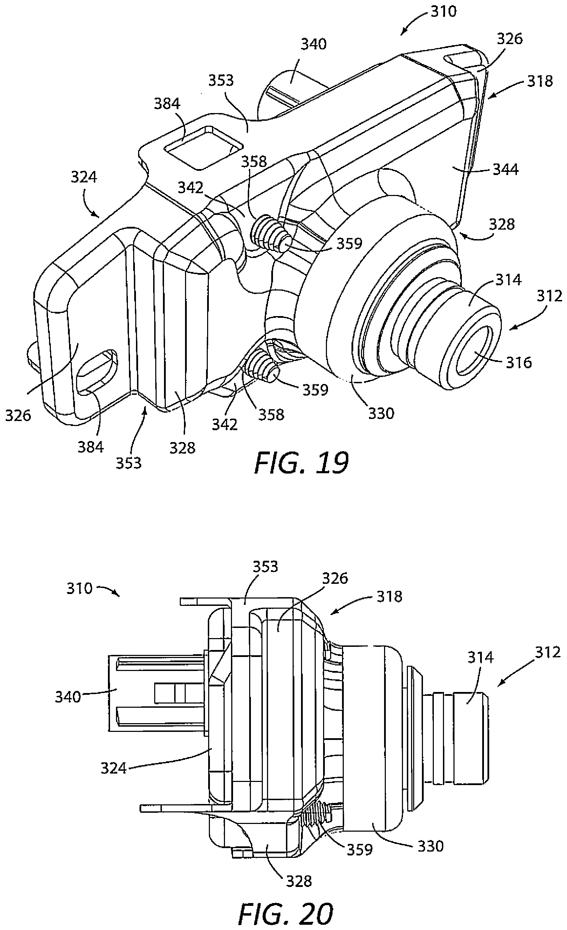

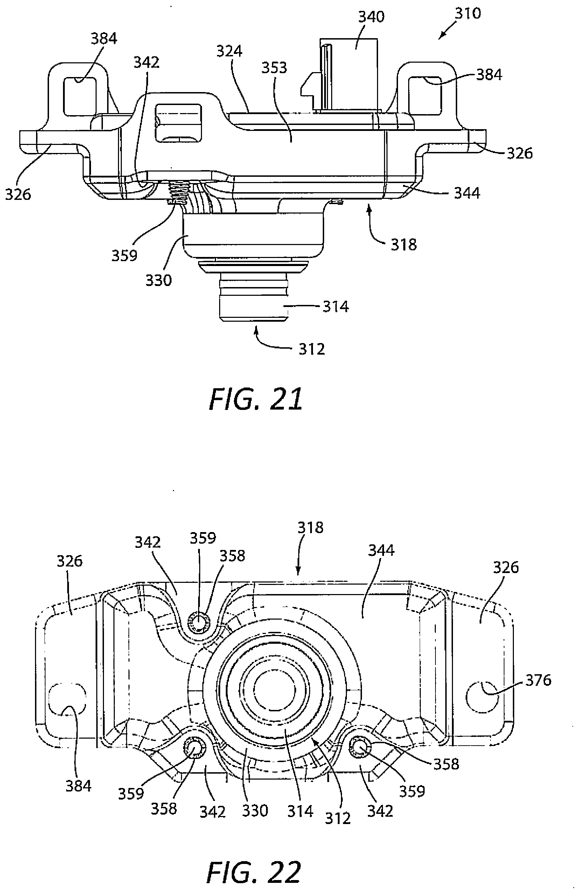

In yet another embodiment, shown in FIGS. 19-24, a camera assembly 310 may include a rear housing 324 and a front housing 328 enclosing and supporting a PCB 320 including a light sensor 322 in a light sensor assembly 318. As discussed above with respect to the various embodiments of FIGS. 1-18, the front housing 328 may include a lens holder 330 that can receive a lens unit 312 therein for focusing an image on light sensor 322. PCB 320 can transmit a signal including the image data collected by light sensor 322 via connector 332, which may extend through a connector aperture 341 in rear housing 324 for direct connection with, for example, an adaptor similar to the adaptors 134 and 234 discussed above, but configured to couple directly with connector 332 without a receptacle or other feature projecting from rear housing 324. Connector 340 includes electrically conductive fingers 343 that make contact with rear housing 324 when assembled to provide improved camera signal integrity when in electrical communication with the video display device.

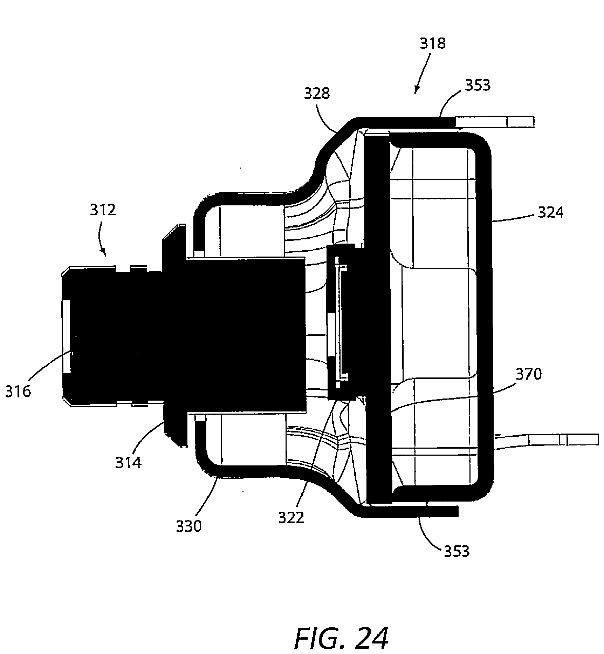

In the variation of camera assembly shown in figs. 19-24, front housing 324 includes an outer flange 353 defining the entire outer periphery thereof. The periphery defined by flange 353 is large enough to receive rear housing 324 within flange 353 such that flange 353 surrounds a portion of rear housing 324, as shown in the cross-sectional view of FIG. 24. In this arrangement, outer flanges 326 are integral with and extend outwardly from front housing 328, rather than rear housing 324, as in other embodiments discussed herein.

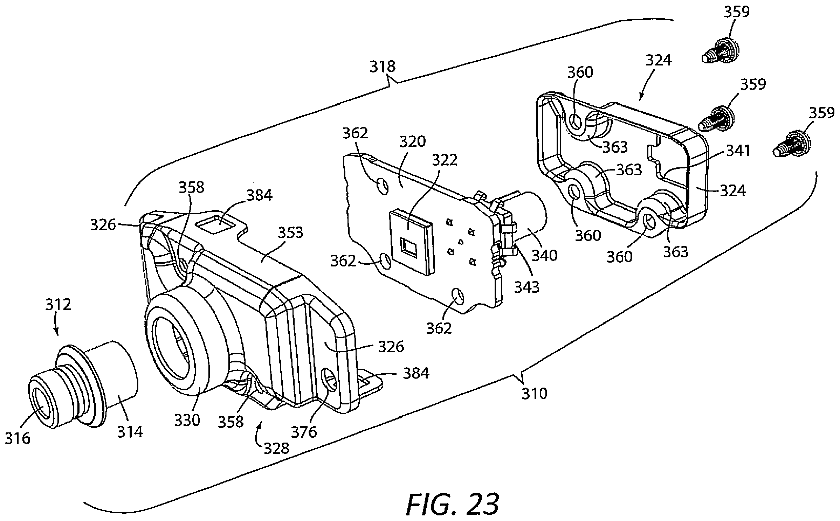

Front housing 328 defines a plurality of first stepped portions 342 along various locations thereof, such portions 342 being separated and partially surrounded by second stepped portion 344, lens unit receptacle 330 being included within second stepped portion. As can be seen from the exploded view of FIG. 23, a plurality of respective threaded holes 358 extend through front housing 328 within first stepped portion. These threaded holes 358 align with through holes 360 in rear housing 324 such that screws 359 can be used to couple rear housing 324 and front housing 328 together. Through holes 360 are positioned along rear housing 324 within respective bosses 363 that align with first stepped portions 342 in front housing 328. PCB 320 also includes a set of through holes 362 that align with through holes 360 and threaded holes 358 such that screws 359 can extend through holes 360 when coupling rear housing 324 with front housing 328 so as to generally secure PCB 320 within the assembled rear housing 324 and front housing 328. I this manner, PCB 320 is captured between respective pairs of a first stepped region 342 and a corresponding boss 363 to maintain a fore-aft positioning of PCB 320 within the assembled rear housing 324 and front housing 328.

As can further be seen in FIG. 24, the overlapping nature of flange 353 with rear housing 324 can compensate for variations in the overall thickness of the light sensor assembly 318, which can, for example, be influenced by variations in the thickness of PCB 320, or tolerance stack-up among the various features (e.g. first stepped portions 342 and bosses 363) of rear housing 324 and front housing 328. In this manner, such variations may be accounted for by allowing for at least some overlap between flange 353 and rear housing 324 throughout a range of variations in the structure of such features. In this manner, rear housing 324 and front housing 328 may not contact each other when coupled together, PCB 320 spacing apart such features, and the outer periphery of PCB 320 being in close contact with front housing 328 and rear housing 324 to effectively close the assembly 318. In an embodiment, various materials, including O-rings, adhesive, dope, caulk, or the like may be applied or otherwise assembled around the interface between rear housing 324, PCB 320, and front housing 328 to at least partially seal the interior of assembly 318 from various contaminants such as moisture, dust or the like, with other interfaces being similarly sealed to a desired degree.

As further illustrated in FIGS. 19-24, front housing 328 may include a plurality of attachment features, such as locator apertures 384 and/or connector apertures 376, which may be positioned within outer flanges 326 and/or within flange 353. These attachment features may be used in connection with various clips, screws, pegs, or the like included in one or more variations of the brackets 133 and 233, discussed above, that may be adapted to receive and retain assembly 310 therewith in a manner similar to brackets 133 and 233. In this manner, camera assembly 310 can be used in a system similar to system 2 in FIG. 7 or other variations thereof.

It will be understood that any described processes or steps within described processes may be combined with other disclosed processes or steps to form structures within the scope of the present device. The exemplary structures and processes disclosed herein are for illustrative purposes and are not to be construed as limiting.

It is also to be understood that variations and modifications can be made on the aforementioned structures and methods without departing from the concepts of the present device, and further it is to be understood that such concepts are intended to be covered by the following claims unless these claims by their language expressly state otherwise.

## Claims

1. A rearview camera assembly (310), comprising:
a lens unit (312) including a lens barrel (314) having a sensor lens therein; and
a light sensor unit (318), including:
a printed circuit board (320) having a light sensor chip (322) mounted thereon;
a rear housing (324) including a plurality of bosses (363) extending inwardly within the rear housing (324), the bosses supporting the printed circuit board (320) on a first side thereof; and
a front housing (328) defining a plurality of first stepped portions (342) separated and partially surrounded by second stepped portion (344), the front housing coupled with the rear housing (324) and supporting the printed circuit board (320) on a second side thereof on at least the first stepped portions (342) of the front housing with portions of the printed circuit board being captured between respective pairs of the first stepped portions (342) and corresponding bosses (363), the front housing defining a lens holder (330), the lens barrel (314) being received within the lens holder (330) so as to align with the light sensor chip (322).

2. The rearview camera assembly of claim 1, wherein the printed circuit board (320) includes a connection feature coupled therewith and in electronic communication with the light sensor (318), the connection feature extending through the rear housing (324).

3. The rearview camera assembly of claim 2, further including a connector (332) extending into the rear housing (324) and coupling with the connection feature.

4. The rearview camera assembly of any of the preceding claims, wherein the front housing (328) is of a metallic material, the printed circuit board (320) being electrically connected with the front housing (328).

5. The rearview camera assembly of any of the preceding claims, wherein:
the front housing (328) includes an outer flange (353) defining a periphery thereof; and
the rear housing (324) is received within the periphery (353) such that the flange at least partially overlaps the rear housing (324).

6. The rearview camera assembly of any of the preceding claims, wherein:
the plurality of first stepped portions (342) are on opposite lateral sides of the front housing (328); and
the front housing (328) supports the printed circuit board (320) on at least the first stepped portions (342) on opposite ends of the printed circuit board (322).

7. The rearview camera assembly of claim 6, wherein the plurality of bosses (363) align with the stepped portions.

8. The rearview camera assembly of claim 6, further including a plurality of screws (359), wherein;
each of the plurality of screws (359) extends through the front housing and through the printed circuit board (320) and engage with the rear housing (324) to couple the front housing (328) to the rear housing (324).

## Patentansprüche

1. Eine Rückfahrkamera-Anordnung (310), die Folgendes umfasst:
eine Linsen- bzw. Objektiveinheit (312), die einen Objektivtubus (314) enthält mit einer Sensorlinse darin; und
eine Lichtsensoreinheit (318), die Folgendes enthält:
eine gedruckte Schaltungsplatine (320) mit einem darauf montierten Lichtsensor-Chip (322);
ein hinteres Gehäuse (324), das eine Vielzahl von Vorsprüngen (363) beinhaltet, die sich innerhalb des hinteren Gehäuses (324) nach innen erstrecken, wobei die Vorsprünge die gedruckte Schaltungsplatine (320) auf einer ersten Seite davon tragen; und
ein vorderes Gehäuse (328), das eine Vielzahl von ersten abgestuften Abschnitten (342) definiert, die getrennt und teilweise von einem zweiten abgestuften Abschnitt (344) umgeben sind, wobei das vordere Gehäuse mit dem hinteren Gehäuse (324) gekoppelt ist und die gedruckte Schaltungsplatine (320) auf einer zweiten Seite davon auf wenigstens den ersten abgestuften Abschnitten (342) des vorderen Gehäuses trägt, wobei Abschnitte der gedruckten Schaltungsplatine zwischen jeweiligen Paaren der ersten abgestuften Abschnitte (342) und entsprechenden Vorsprüngen (363) gefangen sind, wobei das vordere Gehäuse einen Objektivhalter (330) definiert, wobei der Objektivtubus (314) im Objektivhalter (330) aufgenommen wird, um sich mit dem Lichtsensorchip (322) auszurichten.

2. Die Rückfahrkamera-Anordnung nach Anspruch 1, wobei die gedruckte Schaltungsplatine (320) ein damit gekoppeltes und in elektronischer Verbindung mit dem Lichtsensor (318) stehendes Verbindungsmerkmal aufweist, wobei sich das Verbindungsmerkmal durch das hintere Gehäuse (324) erstreckt.

3. Die Rückfahrkamera-Anordnung nach Anspruch 2, die ferner einen Verbinder (332) enthält, der sich in das hintere Gehäuse (324) erstreckt und sich mit dem Verbindungsmerkmal koppelt.

4. Die Rückfahrkamera-Anordnung nach irgendeinem der vorstehenden Ansprüche, wobei das vordere Gehäuse (328) aus einem metallischen Material besteht und die gedruckte Schaltungsplatine (320) elektrisch mit dem vorderen Gehäuse (328) verbunden ist.

5. Die Rückfahrkamera-Anordnung nach irgendeinem der vorstehenden Ansprüche, wobei:
das vordere Gehäuse (328) einen äußeren Flansch (353) beinhaltet, der einen Umfang davon definiert; und wobei
das hintere Gehäuse (324) innerhalb der Peripherie (353) so aufgenommen wird, dass der Flansch das hintere Gehäuse (324) zumindest teilweise überlappt.

6. Die Rückfahrkamera-Anordnung nach irgendeinem der vorstehenden Ansprüche, wobei:
die vielen ersten abgestuften Abschnitte (342) sich auf gegenüberliegenden Seiten des vorderen Gehäuses (328) befinden; und wobei
das vordere Gehäuse (328) die gedruckte Schaltungsplatine (320) an mindestens den ersten abgestuften Abschnitten (342) an gegenüberliegenden Enden der gedruckten Schaltungsplatine (322) trägt.

7. Die Rückfahrkamera-Anordnung nach Anspruch 6, wobei die vielen Vorsprünge (363) mit den abgestuften Abschnitten ausgerichtet sind.

8. Die Rückfahrkamera-Anordnung nach Anspruch 6, die ferner eine Vielzahl von Schrauben (359) enthält, wobei:
jede der Vielzahl von Schrauben (359) sich durch das vordere Gehäuse und durch die gedruckte Schaltungsplatine (320) erstreckt und mit dem hinteren Gehäuse (324) in Eingriff kommt, um das vordere Gehäuse (328) mit dem hinteren Gehäuse (324) zu koppeln.

## Revendications

1. Un ensemble de caméra de vue arrière (310), comprenant :
une unité lentille (312) incluant un barillet d'objectif (314) dans lequel se trouve une lentille de capteur ; et
une unité capteur de lumière (318), comprenant :
une carte de circuit imprimé (320) sur laquelle est montée une puce de capteur de lumière (322) ;
un boîtier arrière (324) incluant une pluralité de bossages (363) s'étendant vers l'intérieur dans le boîtier arrière (324), les bossages supportant la carte de circuit imprimé (320) sur un premier côté de celle-ci ; et
un boîtier avant (328) définissant une pluralité de premières parties étagées (342) séparées et partiellement entourées par une deuxième partie étagée (344), le boîtier avant étant couplé au boîtier arrière (324) et supportant la carte de circuit imprimé (320) sur un deuxième côté de celui-ci sur au moins les premières parties étagées (342) du boîtier avant, des parties de la carte de circuit imprimé étant prises entre des paires respectives des premières parties étagées (342) et des bossages correspondants (363), le boîtier avant définissant un porte-objectif (330), le barillet de l'objectif (314) étant reçu dans le porte-objectif (330) de manière à s'aligner avec la puce du capteur de lumière (322).

2. L'ensemble de caméra de vue arrière d'après la revendication 1, sachant que la carte de circuit imprimé (320) inclut une caractéristique de connexion couplée à celle-ci et en communication électronique avec le capteur de lumière (318), la caractéristique de connexion s'étendant à travers le boîtier arrière (324).

3. L'ensemble de caméra de vue arrière d'après la revendication 2, incluant en outre un connecteur (332) s'étendant dans le boîtier arrière (324) et se couplant avec la caractéristique de connexion.

4. L'ensemble de caméra de vue arrière d'après l'une quelconque des revendications précédentes, sachant que le boîtier avant (328) est en matériau métallique, la carte de circuit imprimé (320) étant électriquement connectée au boîtier avant (328).

5. L'ensemble de caméra de vue arrière d'après l'une quelconque des revendications précédentes, sachant que:
le boîtier avant (328) inclut une bride extérieure (353) définissant une périphérie de celui-ci ; et
le boîtier arrière (324) vient se loger dans la périphérie (353) de manière que la bride chevauche au moins partiellement le boîtier arrière (324).

6. L'ensemble de la caméra de vue arrière d'après l'une des revendications précédentes, sachant que :
la pluralité de premières parties étagées (342) se trouve sur des côtés latéraux opposés du boîtier avant (328) ; et que
le boîtier avant (328) supporte la carte de circuit imprimé (320) au moins sur les premières parties étagées (342) aux extrémités opposées de la carte de circuit imprimé (322).

7. L'ensemble de caméra de vue arrière d'après la revendication 6, sachant que la pluralité de bossages (363) s'aligne avec les parties étagées.

8. L'ensemble de caméra de vue arrière d'après la revendication 6, incluant en outre une pluralité de vis (359), sachant que :
chacune de la pluralité de vis (359) passe à travers le boîtier avant et à travers la carte de circuit imprimé (320) et s'engage avec le boîtier arrière (324) pour coupler le boîtier avant (328) au boîtier arrière (324).
